# EUROPÄISCHE PATENTSCHRIFT

(11) **EP 2 891 824 B1**
(45) Veröffentlichungstag und Bekanntmachung des Hinweises auf die Patenterteilung: **20.10.2021**
(21) Anmeldenummer: 14179872.8
(22) Anmeldetag: 05.08.2014
(51) Int. Cl.: F16H 25/20, H02K 7/06, H02K 21/12

(54) **Schieber**
Slider
Tiroir

(30) Priorität: 29.10.2013 EP 13190697
(43) Veröffentlichungstag der Anmeldung: 08.07.2015
(73) Patentinhaber: Venture-Invest Bohemia s.r.o., 301 00 Pilsen (CZ)
(72) Erfinder: Schüßler, Gerd, 63785 Obernburg (DE)
(74) Vertreter: Köster, Hajo

(56) Entgegenhaltungen:
- EP-A1- 2 853 774
- WO-A1-2009/074032
- DE-U1-202008 001 576
- US-B1- 6 453 761

## Beschreibung

Die Erfindung betrifft einen Schieber mit einem Gehäuse und mit einem Kugelumlaufgewindetrieb mit einer Kugelumlaufspindel und einer damit zusammenwirkenden Kugelumlaufmutter, die durch Lager drehbar im oder am Gehäuse gehaltert ist und die an einem axialen Ende in eine fest mit der Kugelumlaufmutter verbundene Hohlwelle, die zur Verbindung mit einem Elektromotor oder einem anderen Antrieb geeignet ist, übergeht, wobei die Hohlwelle und die Kugelumlaufspindel eine gemeinsame Längsachse besitzen und die Hohlwelle derart dimensioniert ist, dass die Kugelumlaufspindel in den Innenraum der Hohlwelle (13) hineinragen kann.

Hydraulische Schieber beziehungsweise pneumatische Stellzylinder werden in der Industrie und im Maschinenbau häufig eingesetzt. Derartige Schieber beziehungsweise Schiebereinheiten finden zum Bewegen auch schwerer Teile Anwendung, insbesondere im Formenbau, in der Gießerei-Industrie sowie in der Verpackungsindustrie. Ein Hydraulikschieber der genannten Art ist beispielsweise beschrieben in der DE10141745 A1.

Aufgrund der verschiedenen Nachteile von hydraulischen Schiebern ist es auch schon vorgeschlagen worden, diese hydraulischen Schieber durch elektrische Stellzylinder zu ersetzen, man vergleiche Antriebstechnik 3/2013 Seite 46 "Wenn die Luft raus ist" von Manfred Brucksch-Richter. Bei diesen bekannten elektrischen Stellzylindern werden Kugelgewindetriebe eingesetzt.

Kugelgewindetriebe im speziellen und Spindelmotoren im allgemeinen sind in den unterschiedlichsten Ausführungsformen bekannt. Beispielsweise wird in diesem Zusammenhang verwiesen auf die WO 2010/089073A1 und die dort diskutierten Druckschriften.

Diese bekannten Spindelmotoren basieren üblicherweise auf einem Elektromotor, der mit einer Gewindespindel verbunden ist, deren Gewinde mit einem Gewinde einer mit einer Kolbenstange verbundenen Kugelumlaufmutter im Eingriff steht. Das Motorgehäuse des Elektromotors und das Gehäuse mit dem Spindelmotor sind axial hintereinander angeordnet. Das Drehmoment des Elektromotors, als eigene Einheit, wird durch Kupplung/Getriebe/Riementrieb auf die Gewindespindel übertragen.

Der Elektromotor und der Spindeltrieb stellen zwei axial hintereinander angeordnete separate Teile dar. Anders ausgedrückt, der Spindeltrieb ist quasi nur vor dem Elektromotor angeflanscht.

In der EP 2 093 863 B1 ist ein Hohlwellenmotor zur Ankopplung an eine Maschinenwelle beschrieben. Bei diesem Hohlwellenmotor, der einen Stator und einen Hohlwellenrotor, die koaxial zueinander angeordnet sind, umfasst, handelt es sich um einen sogenannten Direktantrieb. Bezüglich des Einsatzgebietes von derartigen Direktantrieben wird auf die genannte Druckschrift verwiesen.

Ferner ist es bekannt, ein Kugelumlaufgewindetrieb mit einem Elektromotor auszustatten, der einen Hohlwellen-Elektromotor darstellt. So ist in der DE 1985 78 05 A1 eine Lineareinheit mit integriertem Elektroantrieb bekannt, bei dem die Kugelumlaufspindel durch die Kugelumlaufmutter und den Elektromotor hindurchgeführt wird. Dabei wird insbesondere die Kugelumlaufmutter durch den Elektromotor angetrieben.

Aus der WO 2009/074032 A1 ist ein elektrisch angetriebener Linearstellzylinder bekannt, der mit einem Gewindetrieb aus einer Spindel und einer damit zusammenwirkenden Kugelumlaufmutter ausgestattet ist. Die Kugelumlaufmutter geht an einem axialen Ende in eine fest mit der Spindelmutter verbundene Hohlwelle über. Diese Hohlwelle ist mittels Lager an einem Gehäuse drehbar gehaltert. Eine Lagerung im Bereich der Spindelmutter ist nicht gegeben.

Bei dem aus der DE 10 2008 025 797 A1 bekannten linearen Stellglied wird letzteres mit einem Elektromotor über eine Kugelumlaufspindel angetrieben. Die Kugelumlaufspindel ist koaxial an einem Ende einer Motorwelle angeordnet. Die Motorwelle ist mit Hilfe eines Paares von Rollenlager drehbar bezüglich eines Gehäuse abgestützt. Zwischen dem Gehäuse und einer Mutter der Kugelumlaufspindel ist ein Rollenlager angeordnet.

Die DE 20 2008 001 576 U1 beschreibt einen Gewindetrieb mit einer Mutter und einer Spindel, wobei die Mutter mittels eines Motors angetrieben ist und die dadurch generierte Drehbewegung der Mutter in einer Axialbewegung der Spindel umgesetzt wird. Als Verdrehsicherung für die Spindel ist eine zumindest teilweise innerhalb des Motors verlaufende Keilwelle vorgesehen.

Die US 6,453,761 B1 beschreibt einen Schieber mit einer kugelgelagerten Spindelmutter und einer damit zusammenwirkenden Spindel, die in einem Gehäuse angeordnet sind, aus dem die Spindel herausgeführt ist.

Aus der EP 2 853 774 A1 ist ein Spindelaktuator mit einem Gehäuse, einem Motor, einer axial beweglichen Spindel und einer axial gehäusefesten Mutter bekannt. Der Motor stellt einen Hohlwellenmotor dar, der einen Innenraum bildet. Die Spindel ist in den Innenraum einfahrbar. Diese Druckschrift stellt lediglich einen Stand der Technik gemäß Artikel 54(3) und (4)(EPÜ) dar.

Aufgabe der vorliegenden Erfindung ist es, einen Schieber bereitzustellen, der auch als E-Motorschieber bezeichnet werden kann, der als direkter Ersatz und somit als Direktantrieb für pneumatische Stellzylinder beziehungsweise hydraulische Schieber in den verschiedensten Anwendungsgebieten in der Industrie und im Maschinenbau eingesetzt werden kann und der leistungsfähiger ist als die bisher bekannten Schieber, indem er unter anderem die bei Betrieb auftretenden Belastungen aufnehmen kann.

Gelöst wird diese Aufgabe durch einen Schieber mit den Merkmalen des Anspruchs 1.

Der erfindungsgemäße Schieber ist mit einem Gehäuse ausgestattet, in dem sich ein Kugelumlaufgewindetrieb mit einer Kugelumlaufspindel und einer damit zusammenwirkenden Kugelumlaufmutter befindet. Durch den Begriff "Zusammenwirken" wird zum Ausdruck gebracht, dass sich die Kugelumlaufspindel in Axialrichtung bewegt, wenn die Kugelumlaufmutter gedreht wird beziehungsweise rotiert. Ein Mitdrehen der Kugelumlaufspindel wird durch die Befestigung der Kugelumlaufspindel an der Frontplatte mit einer eigenen Verdrehsicherung oder auf andere Weise verhindert.

Die Kugelumlaufmutter des erfindungsgemäße Schiebers geht an einem axialen Ende in eine fest mit der Kugelumlaufmutter verbundene oder damit einstückige Hohlwelle über.

Die Längsachse der Hohlwelle fällt mit der Längsachse der Kugelumlaufspindel zusammen. Die Hohlwelle ist derart dimensioniert, dass die Kugelumlaufspindel in die Hohlwelle (genauer in den von der Hohlwelle umgrenzten Innenraum) hineinragen kann. Die Kugelumlaufspindel ist somit derart geführt, dass sie in Richtung der Längsachse hin- und herbewegt werden kann.

Die Hohlwelle dient dazu, mit einem Elektromotor oder einem anderen Antrieb verbunden zu werden, so dass durch diesen Motor bzw. Antrieb die Hohlwelle und somit die Kugelumlaufmutter gedreht wird.

Der Gegenstand der Erfindung ist gemäß einer ersten Variante ein Schieber als solcher, der somit nicht mit einem Elektromotor oder Ähnlichem fest verbunden oder ausgestattet ist. Gleichwohl ist auch Gegenstand der vorliegenden Anmeldung gemäß einer zweiten Variante ein Schieber, der mit einem Elektromotor ausgestattet ist. Darauf wird jedoch erst später eingegangen.

Der erfindungsgemäße Schieber zeichnet sich dadurch aus, dass die Lager der Kugelumlaufmutter derart angeordnet sind, dass sich die Kugelumlaufmutter zumindest teilweise zwischen den beiden Lagern erstreckt sind und die Lager sowohl radiale als auch axiale Kräfte aufnehmen können.

Es ist zwar möglich, dass sich die Kugelumlaufmutter an einem axialen Ende und/oder am anderen axialen Ende über das dazugehörige Lager hinaus erstreckt. Die Lager sind jedoch vorzugsweise an den axialen Enden der Kugelumlaufmutter angeordnet. Anders ausgedrückt, die Lager sind axial beabstandet und befinden sich vorzugsweise an den axialen Enden der Kugelumlaufmutter.

Die Lager sind derart angeordnet, dass Sie bei Belastung und somit beim bestimmungsgemäßen Einsatz des Schiebers sowohl axiale Kräfte als auch radiale Kräfte aufnehmen können.

Der erfindungsgemäße Schieber zeichnet sich ferner dadurch aus, dass sich die Hohlwelle ausgehend von der Kugelumlaufmutter außerhalb des gelagerten Bereichs an diesen Bereich anschließt. Die Hohlwelle ist dabei mit der Kugelumlaufmutter einstückig ausgebildet.

Das Gehäuse umschließt erfindungsgemäß den Innenraum, in dem die Kugelumlaufmutter und die dazu gehörigen Lager angeordnet sind. Lediglich die Hohlwelle und die Kugelumlaufspindel sind aus diesem Innenraum heraus geführt.

Dieser Innenraum kann quasi einen virtuellen Innenraum darstellen, bei dem das Gehäuse nicht alle Seiten des Innenraumes abdeckt, so dass der Innenraum teilweise offen ist.

Das Gehäuse umschließt somit mit seinen verschiedenen Elementen, worauf nachstehend noch näher eingegangen wird, diesen Innenraum. Mit anderen Worten, der Innenraum ist vorzugsweise nach außen hin geschlossen. Lediglich die Kugelumlaufspindel und die Hohlwelle sind aus dem Innenraum - wie oben dargelegt - herausgeführt.

Der erfindungsgemäße Schieber stellt somit eine separat handhabbare Einheit dar, die lediglich noch mit einem Antrieb zu verbinden ist. Dies ist auf einfache Weise möglich, da die Hohlwelle axial im Anschluss an die Kugelumlaufmutter angeordnet ist und vorzugsweise aus dem virtuellen Innenraum und insbesondere aus dem nach außen hin geschlossenen Innenraum hinausragt.

Nach einer bevorzugten Ausführungsform ist die Hohlwelle derart dimensioniert, dass die Kugelumlaufspindel durch den Innenraum der Hohlwelle hindurchragen kann bzw. hindurch erstrecken kann.

Wird die Kugelumlaufspindel in Axialrichtung zur Hohlwelle hin und her bewegt, wird sie in die Hohlwelle hinein und vorzugsweise durch die Hohlwelle hindurch geschoben.

Nach einer weiterhin bevorzugten Ausführungsform, kann die Kugelumlaufspindel in einen Hohlraum hineinragen. Der Hohlraum, die Kugelumlaufspindel und die Hohlwelle besitzen dabei eine gemeinsame Längsachse. Dieser Hohlraum kann sich an die Hohlwelle axial anschließen. Allerdings kann dieser Hohlraum auch derart konfiguriert sein, dass die Hohlwelle teilweise in den Hohlraum hineinragt.

Wird die Kugelumlaufspindel in Axialrichtung zur Hohlwelle hinbewegt, wird sie in die Hohlwelle hinein und danach vorzugsweise durch die Hohlwelle hindurch insbesondere in den Hohlraum geschoben.

Die Form des Innenraumes bzw. die dessen Querschnittsform kann im Prinzip beliebig sein. So kann dieser Innenraum beispielsweise eine längliche Form und insbesondere quaderförmig sein. Vorzugsweise ist der Innenraum jedoch hohlzylinderförmig bzw. stellt einen Hohlzylinder da, der an seinen beiden axialen Enden durch ein Gehäuseelement oder eine separate Abschlusswand verschlossen ist.

Dieser Innenraum kann beispielsweise durch die radiale Wand eines Hohlzylinders umschlossen werden und somit durch die Wand gebildet werden. Zudem ist es auch möglich, diesen Innenraum in einem Quaderblock oder ähnlichem auszubilden.

Gemäß einer zweiten Variante ist der erfindungsgemäße Schieber vorzugsweise mit einem Elektromotor ausgerüstet, der mit einem Rotor und einem Stator ausgestattet ist und die Kugelumlaufmutter antreiben und somit drehen kann. In diesem Fall ist Gegenstand der Erfindung eine Kombination aus einem erfindungsgemäßen Schieber und einem Elektromotor.

Der Elektromotor steht mit der Hohlwelle in Wirkverbindung. Damit soll zum Ausdruck gebracht werden, dass der Elektromotor das durch ihn ausgeübte Drehmoment auf die Hohlwelle überträgt. Der Elektromotor ist somit direkt oder indirekt (wird nachstehend erläutert) mit der Hohlwelle verbunden.

Nach einer bevorzugten Ausführungsform ist der Rotor des Elektromotors drehstarr (und somit direkt) an der Hohlwelle befestigt oder über ein Getriebe (und somit indirekt), insbesondere über ein Planetengetriebe, damit verbunden, während der Stator fest mit dem Gehäuse verbunden ist. Es ist lediglich erforderlich, dass der Rotor das durch den Elektromotor erzeugte Drehmoment auf die Kugelumlaufmutter überträgt und somit dreht bzw rotiert.

Die Hohlwelle kann auch - wie bereits oben dargelegt - als ein Hohlwellenstutzen bezeichnet werden, der an einem axialen Ende mit der Kugelumlaufmutter verbunden ist. Die axiale Länge der Hohlwelle bzw. des Hohlwellenstutzens ist im Prinzip beliebig. Erforderlich ist lediglich, dass der Elektromotor und vorzugsweise der Rotor wirkmäßig damit verbunden bzw. in Wirkverbindung gebracht werden kann, indem er beispielsweise daran angeflanscht wird. Das Merkmal "Hohlwelle" umfasst in den nachfolgenden Darlegungen auch das Merkmal "Hohlwellenstutzen".

Da der Rotor über die Hohlwelle an der Kugelumlaufmutter befestigt ist, wird er durch die Lagerung der Kugelumlaufmutter quasi "mitgelagert", denn letztere ist drehbar in dem oder an dem Gehäuse des Schiebers gelagert. Der Elektromotor und auch das rotierende Element dieses Elektromotors bzw. der Rotor verfügt somit vorzugsweise über keine eigene Lagerung. Das sich nicht drehende Element des Elektromotors bzw. der Stator ist natürlich fest mit dem Gehäuse verbunden beziehungsweise daran befestigt.

Nach einer bevorzugten Ausführungsform sind der Rotor und der Stator konzentrisch um einen Hohlraum angeordnet; die Längsachse dieses Hohlraumes fällt mit der Längsachse der Kugelumlaufspindel und der Hohlwelle zusammen. Somit verfügen der Hohlraum, die Kugelumlaufspindel und die Hohlwelle über eine gemeinsame Längsachse.

Dieser Hohlraum ist bei letzterer Ausführungsform vorzugsweise gemäß einer ersten Alternative axial anschließend an die Hohlwelle angeordnet und derart dimensioniert und ausgestaltet, dass die Kugelumlaufspindel in den Hohlraum hineinragen kann. Bei dieser Alternative sind der Rotor und der Stator des Elektromotors in Axialrichtung zum Kugelumlaufgewindetrieb angeordnet. Mit anderen Worten, der Kugelumlaufgewindetrieb und der Elektromotor sind in Axialrichtung hintereinander angeordnet. Die Längsachse des Kugelumlaufgewindetriebes und somit der Kugelumlaufspindel fällt mit der Längsachse des Elektromotors zusammen beziehungsweise stellt dessen Verlängerung dar.

Mit dem erfindungsgemäßen Schieber können nicht nur starke axiale Kräfte erzeugt werden, sondern auch eine kompakte Bauweise erreicht werden.

Im Falle der oben beschriebenen ersten Alternative wird durch die axiale Hintereinander-Anordnung von Kugelumlaufgewindetrieb und Elektromotor der Außendurchmesser klein gehalten. Vorzugsweise wird bei dieser Alternative auch der Elektromotor von einem Gehäusebereich umgeben. Dieser Gehäusebereich stellt eine Art einer axialen Fortsetzung des Gehäuses des Kugelumlaufgewindetriebes dar.

Im Gesamt-Gehäuse, aufgebaut aus dem Gehäuse des Kugelumlaufgewindetriebes und dem Gehäusebereich des Elektromotors, sind somit beide Elemente angeordnet. Dadurch wird eine Art stabmäßige Form mit beispielsweise rundem oder viereckigem Querschnitt erzielt, die bestens geeignet ist, vorhandene und somit bereits bekannte sowie häufig zum Einsatz kommende Hydraulikantriebe zu ersetzen, welche in vielen Fällen die gleiche Form besitzen.

Bei einer zweiten Alternative ist das Gehäuse zusammen mit dem darin befindlichen Kugelumlaufgewindetrieb zumindest teilweise im Inneren des Hohlraumes angeordnet. Rotor und Stator und somit der Elektromotor sind zumindest teilweise radial außen von der Kugelumlaufmutter sowie dem dazugehörigen Gehäuse angeordnet. Zweckmäßigerweise ragt der Elektromotor nicht in Axialrichtung über das Gehäuse der Kugelumlaufmutter bzw. die Kugelumlaufmutter hinaus. Der Durchmesser des erfindungsgemäßen Schiebers ist bei dieser Alternative zwar größer als bei der ersten Alternative. Allerdings ist im Gegenzug die axiale Baulänge kürzer, so dass diese Alternative bei bestimmten beengten Platzverhältnissen eingesetzt werden kann. Es ist jedoch auch möglich, dass der Elektromotor zumindest teilweise in Axialrichtung über das Gehäuse der Kugelumlaufmutter bzw. die Kugelumlaufmutter hinausragt.

Vorzugsweise stellt der Elektromotor einen Synchronmotor dar. Durch diesen Aufbau als Synchronmotor wird ein höherer Wirkungsgrad erzielt. Durch eine optimierte Wicklung können das Drehmoment und die Verluste reduziert werden.

Der Rotor des Elektromotors stellt vorzugsweise einen Außenläufer dar.

Weiterhin bevorzugt stellt der Rotor eine Glocke dar bzw. besitzt die Form einer Glocke, die sich koaxial zur Längsachse der Kugelumlaufspindel in Axialrichtung anschließend an die Kugelumlaufmutter erstreckt und mittels derer der Rotor drehstarr mit der Hohlwelle verbunden ist. Der Stator ist in dem von der Glocke umgrenzten Innenraum angeordnet.

Die Glocke und daher der Außenläufer sind somit an der Kugelumlaufmutter gelagert. Die Glocke bzw. der Rotor bildet eine Einheit mit dieser Kugelumlaufmutter. Die Lagerung des Rotors erfolgt über die axiale Lagerung der Kugelumlaufmutter. Der Elektromotor besitzt daher vorzugsweise keine eigene Lagerung und erspart somit zusätzlichen Einbauraum. Durch diese Ausgestaltung besitzt der Außenläufer bei gleicher Baugröße ein höheres Drehmoment. In diesem Fall werden die Drehmomente des Rotors von der Glocke aufgenommen und von dort direkt auf die Kugelumlaufmutter übertragen.

Handelt es sich um einen Synchronmotor, sind die Magnete vorzugsweise innen an der Glocke befestigt, die sich koaxial zur Achse der Kugelumlaufspindel und somit auch des Motors erstreckt und an dem zur Kugelumlaufmutter zeigenden Ende drehstarr und somit fest sowie insbesondere unlösbar mit letzterer verbunden. Die Magnete des Rotors befinden sich dabei zweckmäßigerweise an der radial innen liegenden Wand der Glocke, die nachstehend noch näher beschrieben ist.

Der Stator ist in dem bzw. im Inneren des von der Glocke umgrenzten Innenraum angeordnet. Das Reaktionsmoment des Stators wird insbesondere über eine rückseitige Abdeckung auf das Gehäuse übertragen.

Die Kugelumlaufmutter übernimmt neben der Funktion als Spindelantrieb für die Linearbewegung der Kugelumlaufspindel zusätzlich auch die Funktion der Axial-Lagerung. Über diese Axial-Lagerung werden die gesamten Kräfte in axialer, radialer und tangentialer Richtung, welche auf die Kugelumlaufspindel einwirken, direkt auf die Befestigung des Gehäuses des Kugelumlaufgewindetriebes übertragen. Der Elektromotor wird nur durch das magnetische Reaktionsmoment (Drehmoment) des Antriebes belastet.

Über den Antriebsstrang werden nur die Drehmomente des Rotors aufgenommen.

Der hohe Wirkungsgrad des Synchronmotors in Verbindung mit dem reibungsoptimierten Kugelgewindetrieb reduziert die Verluste des Systems. Die elektrischen und mechanischen Verluste können auf ein Minimum reduziert werden. Die erfindungsgemäße Entwicklung gewährleistet durch die minimalen Verluste eine deutlich höhere Energieeffizienz als vergleichbare hydraulische Konzepte und gewährleistet bei gleicher Leistung eine höhere Einschaltdauer.

Letztere Aussagen gelten natürlich auch für den Fall, dass statt eines Elektromotors ein anderer Antrieb eingesetzt wird und mit der Hohlwelle direkt oder indirekt verbunden ist.

Weiterhin bevorzugt ist am freien Ende der Kugelumlaufspindel ein absolutes sich in axialer Richtung erstreckendes absolutes Linearmesssystem angeordnet, das die Spindelstellung erfassen und den Elektromotor steuern kann. Eine absolute Messung vereinfacht die Inbetriebnahme und das Starten des Systems, da stets die absolute Position der Kugelumlaufspindel angezeigt wird. Ein Referieren beim Start kann somit entfallen. Gleichzeitig können die Position für die Eingrenzung der Bewegung beim Anwender über Softwareprogramme erfasst werden, so dass kein eigener Endschalter benötigt wird. Zusätzliche Endschalter für Sicherheitsbegrenzungen können im Gehäuse oder außerhalb des Gehäuses in bekannter Weise über Schaltfahnen für Notausfunktionen angebracht werden. Die absolute Messung kann sowohl über ein absolut akustisches Messverfahren sowie über ein rotatives Messverfahren erfolgen.

Die Kühlung des Stators kann über Wärmeleitung erfolgen oder mit Hilfe elektrisch arbeitender Peltier-Kühlelemente vorgenommen werden. Für eine besonders hohe Kühlleistung, beispielsweise bei langer Einschaltdauer, wird ein axialer Ventilator eingesetzt.

Der erfindungsgemäße Schieber ist derart konzipiert, dass ein bestehender hydraulischer Schieber durch den Austausch der Hydraulik beispielsweise in einen E-Motorschieber umgebaut werden kann. Die Abmessungen für den Einbauraum müssen nicht verändert werden. Somit kann ein hydraulischer Schieber direkt gegen den erfindungsgemäßen Schieber ausgetauscht werden.

Der erfindungsgemäße Schieber wird von einer elektrischen Steuerung angetrieben, die in jeder CNC Maschine mehrfach verwendet wird. Energie wird lediglich benötigt, wenn der Schieber bewegt wird.

Beim erfindungsgemäßen Schieber sind die bewegten Massen reduziert. Dadurch kann die Regelung des Antriebes wesentlich dynamischer erfolgen.

Die Montage und Demontage im Falle eines Elektromotors erfolgt durch Verbinden des Rotors mit der Kugelumlaufmutter und durch einfaches Aufschieben des Statorpakets mit dem dazugehörigen Gehäuse und Endelement, worauf nachstehend noch näher eingegangen wird.

Der erfindungsgemäße Schieber wird nachstehend anhand der beiliegenden Zeichnungen näher erläutert. Dabei zeigen:
- Fig. 1a: einen Längsschnitt durch einen erfindungsgemäßen Schieber gemäß einer ersten Variante nach einer ersten Alternative,
- Fig. 1b: einen dem Längsschnitt der Fig. 1a analogen Längschnitt durch eine zweite Alternative eines erfindungsgemäßen Schiebers gemäß der ersten Variante,
- Fig. 1c: einen dem Längsschnitt der Fig. 1a analogen Längschnitt durch eine dritte Alternative eines erfindungsgemäßen Schiebers gemäß der ersten Variante,
- Fig. 1d: eine perspektivische Ansicht des in der Fig. 1c gezeigten Schiebers, bei dem ein Teil des Gehäuses weggebrochen ist,
- Fig. 2: einen Längsschnitt durch den in der Figur 1c gezeigten Schieber gemäß einer zweiten Variante, bei der der Schieber mit einem Elektromotor ausgestattet ist,
- Fig. 3: einen Längsschnitt durch einen in der Figur 1a gezeigten Schieber gemäß einer zweiten Variante, bei der der Schieber mit einem Elektromotor ausgestattet ist, und
- Fig. 4: einen Längsschnitt durch eine weitere Ausführungsform eines erfindungsgemäßen Schiebers gemäß der zweiten Variante, bei der der Schieber mit einem indirekt damit verbundenen Elektromotor ausgestattet ist.

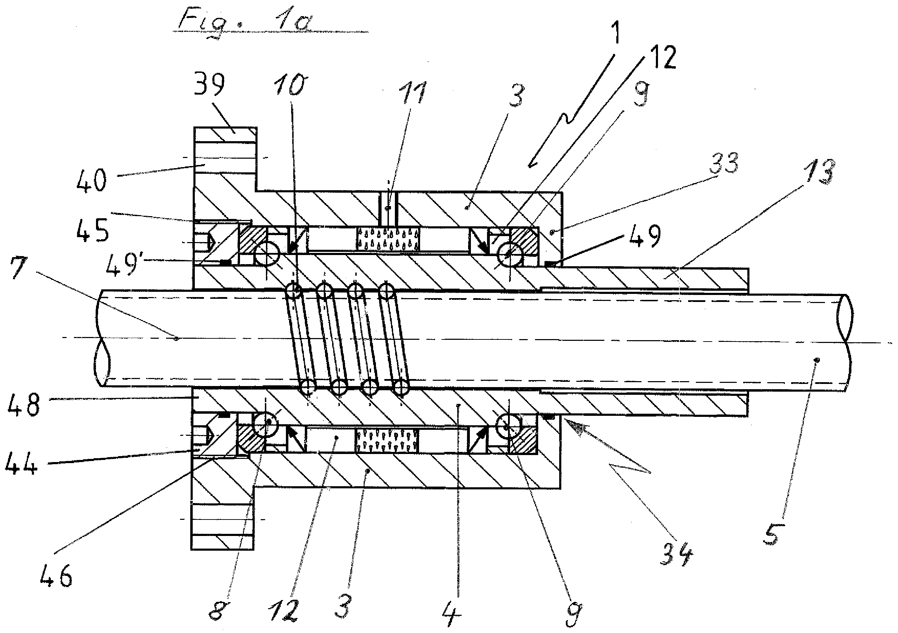

In der Fig. 1a ist ein Längsschnitt durch eine erste Variante eines Schiebers 1 gezeigt. In einem Gehäuse 3,33,44 ist eine Kugelumlaufmutter 4 drehbar gelagert ist. Durch diese Kugelumlaufmutter 4 erstreckt sich eine Spindel in Form einer Kugelumlaufspindel 5. In einem Kugelkanal 10 befinden sich als Wälzkörper dienende Kugeln. Aus Kugelumlaufmutter 4, Kugelumlaufspindel 5 sowie den Kugeln im Kugelkanal 10 wird ein Kugelumlaufgewindetrieb gebildet, dessen Ausgestaltung bekannter Natur ist.

An einem Ende der Kugelumlaufmutter 4 (rechts in der Figur 1a) geht diese in einen koaxialen Hohlzylinderstutzen 13 über. Dies stellt das antriebsseitige Ende des Kugelumlaufgewindetriebes dar, denn der Hohlzylinderstutzen 13 dient zur Verbindung mit einem Antrieb, beispielsweise einem Elektromotor. Mit diesem Hohlzylinderstutzen 13 wird ein Antrieb entweder drehstarr oder mittels eines Getriebes verbunden.

Das Gehäuse besitzt eine sich in der Schnittansicht in Längsrichtung erstreckende Seitenwand 3, die antriebsseitig in eine sich radial erstreckende Abschlusswand 33 übergeht, in der sich eine zylindrische Durchgangsöffnung 34 befindet, durch welche sich der Hohlzylinderstutzen 13 aus dem Gehäuse heraus und somit nach außen erstreckt.

Die Seitenwand 3 umgrenzt radial einen hohlzylindrischen Innenraum 12. Durch diese Seitenwand 2 wird somit ein hier auch als virtuell bezeichneter Innenraum begrenzt, obwohl dieser Innenraum 12 nicht vollständig nach außen abgeschlossen ist. Kommen weitere Elemente hinzu, dann kann sich auch ein tatsächlich abgeschlossener Innenraum 12 ergeben.

An einer Stirnseite des Innenraumes 12 wird dieser durch die Abschlusswand 33 nach außen hin teilweise abgeschlossen wird. Die Durchgangsöffnung 34 wird durch den sich dadurch erstreckenden Hohlzylinderstutzen 13 ausgefüllt, so dass der Innenraum 12 dadurch an dieser Stirnseite vollständig nach außen hin abgeschlossen wird.

Die Seitenwand 3 stellt eine radial umlaufende Seitenwand dar. Der Schieber 1 stellt bei dieser Variante ein stabförmiges Element dar. Der Innenraum besitzt die Form eines Hohlzylinders. Der erfindungsgemäße Schieber ist jedoch nicht auf diese Form des Innenraumes beschränkt, der beispielsweise im Querschnitt auch im wesentlichen quadratisch sein kann und zweckmäßigerweise abgerundeten Ecken besitzt.

Der Innenraum 12 ist an der anderen Stirnseite durch eine Kreisringscheibe 44 teilweise abgeschlossen. Diese Kreisringscheibe 44 ist am radialen Außenrand mit einem Gewinde 45 versehen, das mit einem gegenüberliegenden, an der Innenwandung der Seitenwand 3 ausgebildeten Gewinde 46 derart zusammenwirkt, dass die Kreisringscheibe 43 in den Innenraum 42 eingedreht werden kann.

Die Kreisringscheibe 44 umgrenzt eine Durchgangsbohrung 47, in welche sich ein hohlzylindrische Fortsatz 48 der Kugelumlaufmutter 4 hinein, jedoch nicht darüber hinaus erstreckt. Durch diesen Fortsatz 48 kann sich die Kugelumlaufspindel 5 nach draußen erstrecken. Auf diese Weise wird der hohle Innenraum 12 auch auf dieser Stirnseite vollständig nach außen abgeschlossen.

Sowohl zwischen der Kreisringscheibe 44 und dem Fortsatz 48 als auch zwischen der Abschlusswand 33 und dem Hohlzylinderstutzen 13 befinden sich Abstreifringe bzw. Bürsten 49,49', um ein Eindringen von Schmutz zu verhindern.

An der Kreisringscheibe 44 ist axial innen zum Innenraum 12 hin ein ersten Lager 8 abgestützt. An dem anderen axialen Ende des Innenraumes 12 befindet sich ein zweites Lager 9, das in Axialrichtung an der Abschlusswand 33 abgestützt ist. Diese beiden Lager 8,9 kommen auch axial gegen die Kugelumlaufmutter 4 in Anlage.

Durch Eindrehen der Kreisringscheibe 43 kann das Lager 8 mit der Kugelumlaufmutter 4 und über die Kugelumlaufmutter 4 auch mit dem zweiten Lager 9 verspannt werden. Dadurch können sehr starke axial auftretende Kräfte zwischen Kreisringscheibe 43 und Abschlusswand 33 aufgenommen werden.

Die Lager 8 und 9 liegen radial außen an der Seitenwand 3 des Innenraumes 12 und auch an der Kugelumlaufmutter 4 an und können daher auch radial wirkende Kräfte aufnehmen. Auf Grund dieser Anordnung könne nicht nur radiale sowie axiale Kräfte sondern auch tangentiale Kräfte aufgenommen werden.

Die Kugelumlaufmutter 4 besitzt die Form eines Hohlzylinderrohres und ist an ihren beiden axialen Enden durch die Lager 8,9 in dem Innenraum 12 drehbar gelagert. Die Kugelumlaufspindel 5 ragt beidseitig bei der in der Zeichnung gezeigten Position aus demjenigen Abschnitt des Gehäuses 3,33,44 heraus, in dem der Kugelumlaufgewindetrieb untergebracht ist. Der Kugelumlaufgewindetrieb ist durch das axial beidseitig geschlossene Gehäuse gegen äußere Verschmutzung geschützt.

Die Seitenwand 3 besitzt eine Öffnung 11, durch welche von außen ein Schmiermittel in den radial umlaufenden hohlen Zwischenraum zugeführt werden kann. Dieser Zwischenraum befindet sich zwischen dem Außenmantel der Kugelumlaufmutter 4 und der Innenwandung der Seitenwand 3 axial zwischen den beiden Lagern 8,9.

Die Seitenwand 3 besitzt an demjenigen Ende, welches dem Hohlzylinderstutzen 13 gegenüberliegt, einen umlaufenden Ringflansch 39 mit mehreren Bohrungen 40. Mittels dieses Ringflansches 39 kann das Gehäuse an einem anderen Maschinenelement befestigt werden. Diese Befestigung bzw. dieser Anbau an ein weiteres Maschinenelement ist nicht dargestellt.

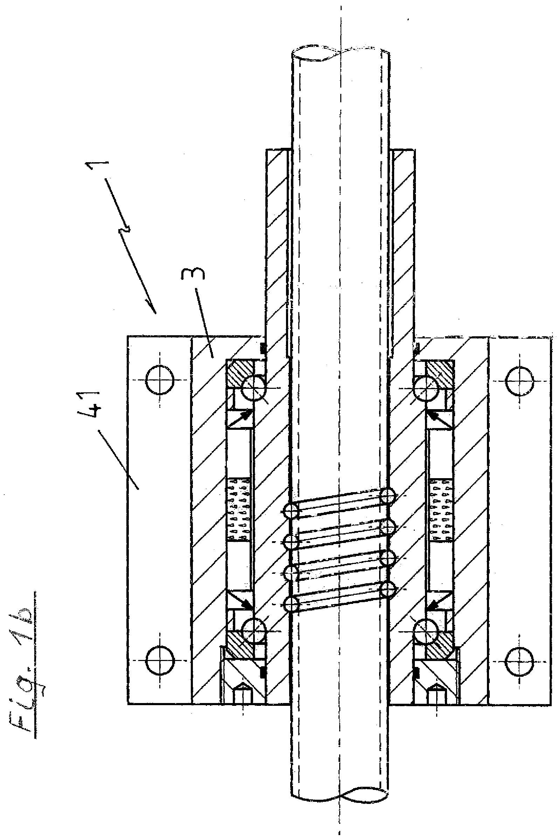

Der in der Figur 1b gezeigte Längsschnitt eines Kugelumlauf-Schiebers 1 entspricht dem in der Figur 1a gezeigten Längsschnitt. Der Unterschied besteht in der Art und Weise, wie dieser Schieber 1 mit einem weiteren Maschinenteil verbunden ist. So ist die Seitenwand 3 radial außen mit einem weiteren Maschinenelement 41 verbunden.

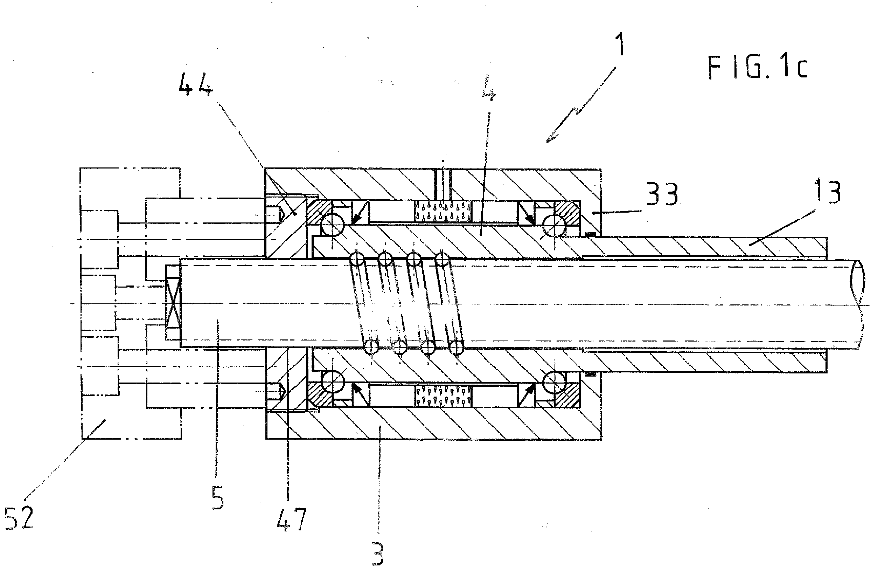

Der in der Fig. 1c gezeigte Schieber 1 entspricht in wesentlichen Elemente ebenfalls den bisher beschriebenen Schiebern. Daher werden nachstehend auch nur die Unterschiede näher erläutert.

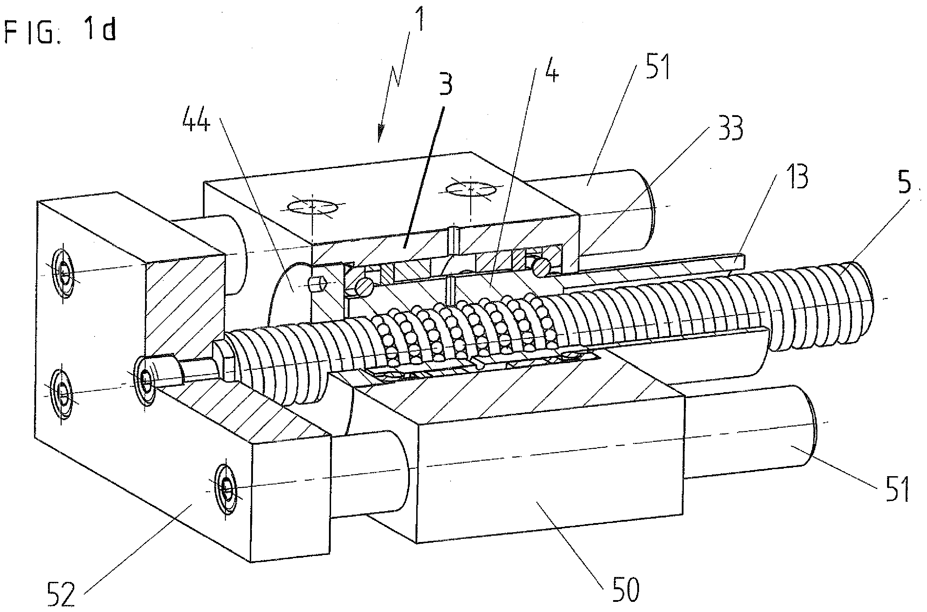

Ein Unterschied besteht darin, dass der Innenraum 12 in einem in etwa quaderförmigen Materialblock 50 (man vergleiche Fig. 1d) in Form einer hohlzylindrischen Sackbohrung ausgenommen ist. In diesem Materialblock sind auch 4 Führungszylinder 51 axial verschiebbar gelagert sind, die mit einem Stempel 52 verbunden sind, der durch die damit ebenfalls verbundene Kugelumlaufspindel 5 in Axialrichtung hin- und herbewegt werden kann. Das Gehäuse 3 wird in diesem Fall vom Materialblock 50 gebildet.

Ein weiterer Unterschied besteht darin, dass die Kreisringscheibe 44 radial nach innen bis zur Kugelumlaufspindel 5 heran reicht. Die Durchgangsbohrung 47 wird somit lediglich durch die Kugelumlaufspindel 5 ausgefüllt.

Die in den Figuren 1a bis 1d gezeigten Schieber 1 gemäß der ersten Variante stellen eine separat handhabbare Einheit dar, die lediglich mit einem Antrieb versehen werden muss, um ihre Funktion eines Schiebers erfüllen zu können. Um dies zu erreichen, wird die Hohlwelle 13 direkt oder indirekt mit einem Antrieb verbunden.

Die Kombination aus einem Schieber 1 mit einem Antrieb kann wiederum ebenfalls eine separat handhabbare Einheit bilden. Es ist jedoch auch möglich, den Schieber 1 mit einem Antrieb zu verbinden, der bereits in einem Arbeitsgerät vorhanden bzw. dort ausgebildet ist.

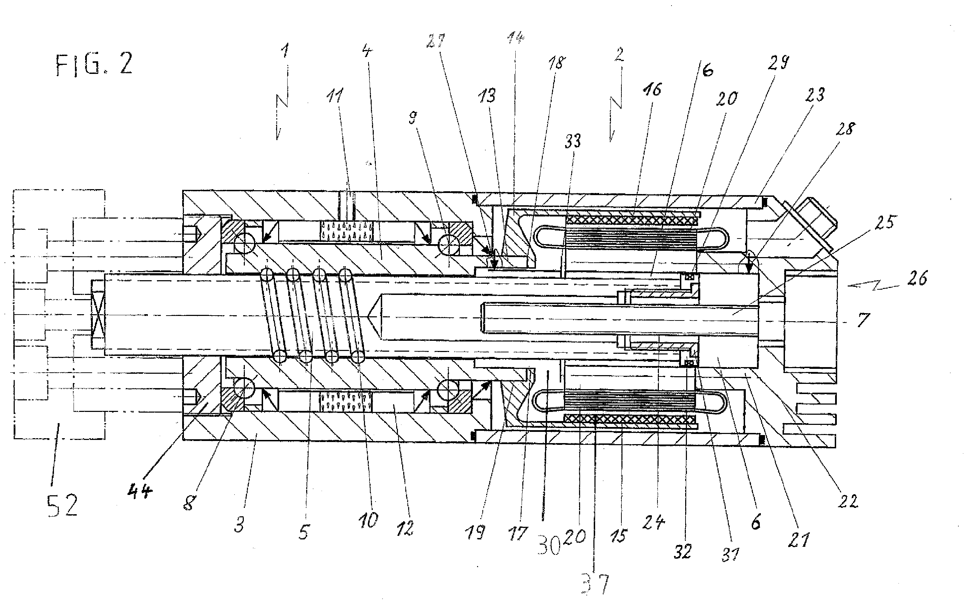

Bei der in der Figur 2 gezeigten Ausführungsform ist der Schieber 1 mit einem Elektromotor 2 verbunden. Schieber 1 und Elektromotor 2 sind dabei in Axialrichtung nacheinander bzw. hintereinander angeordnet. Die im Zusammenhang mit den in den Figur 1a, b, c und d erläuterten Elemente sind in der Figur 2 mit den gleichen Bezugszeichen versehen.

Der Elektromotor 2 ist mit einem Stator 20 und einem Rotor 16 ausgestattet. Die elektrischen Anschlüsse sind üblicher Art.

In der in der Figur 2 gezeigten Position befindet sich die Kugelumlaufspindel 5 in der zurückgezogenen bzw. eingefahrenen Position. In dieser Position bzw. Stellung ragt eines ihrer Enden in einen von dem Stator 20 umgrenzten zentralen Hohlraum 6 mit kreisscheibenförmigem Durchmesser hinein. Kugelumlaufspindel 5, Hohlzylinderstutzen 13 und Hohlraum 6 besitzen eine gemeinsame Längsachse 7. Dieser Hohlraum 6 erstreckt sich axial im Anschluss an den Hohlzylinderstutzen 13.

An dem axialen Ende der Kugelumlaufspindel 5, welches dem Elektromotor 2 gegenüberliegt, kann die Kugelumlaufspindel 5 mit einer Stempel 52 gemäß Fig. 1c und d, einer Kolbenstange oder ähnlichem verbunden sein, um die axial wirkenden Kräfte auf ein anderes Maschinenteil zu übertragen. Dies wird in der Figur 2 mit strichpunktierten Linien dargestellt. Eine derartige Ausgestaltung ist bekannt und benötigt keiner weiteren Erläuterungen.

An dem Hohlzylinderstutzen 13 ist eine Glocke 14 drehstarr und somit drehfest befestigt ist. Diese Glocke 14 ist rotationssymmetrisch zur Längsachse 7 und dreht sich "frei im Raum" um den Hohlraum 6, wenn sich die Kugelumlaufmutter 4 dreht. Sie umgrenzt einen Innenraum 30, innerhalb dessen somit Stator 20, Rotor 16 und Hohlraum 6 angeordnet sind.

Die Glocke 14 besitzt im Längsschnitt im etwa eine U-Form mit einer radial umlaufenden, sich in Axialrichtung erstreckenden Seitenwand 15. Radial innen an dieser Seitenwand 15 ist der Rotor 16 bzw. sind die entsprechenden Magnete des Rotors 16 des Elektromotors 2 angebracht. Es handelt sich dabei um einen permanenterregten Synchronmotor als Außenläufer.

Im Boden der U-Form ist eine koaxiale durchgehende Bohrung 17 vorgesehen, durch welche sich die Kugelumlaufspindel 5 in den Hohlraum 6 des Elektromotors 2 erstrecken kann. Der Durchmesser dieser Bohrung 17 verringert sich von der Gewindetriebseite her kommend nach axial innen und somit zum Elektromotor 2 hin schlagartig unter Ausbildung einer Schulter 18. Dadurch entsteht ein kreisringförmiger, radial umlaufender Raum 19, in dem das freie Ende des Hohlzylinderstutzens 13 zu liegen kommt bzw. von diesem ausgefüllt wird.

Dem Rotor 16 radial innen gegenüberliegend ist der Stator 20 des Elektromotors 2 angeordnet. Dieser Stator 20 ist axial außen mit einem Hohlzylinderrohr 21 fest verbunden, das über ein axiales, den Abschnitt des Gehäuses 3, in dem der Elektromotor 2 untergebracht ist, abschließendes Endteil 22 mit einem sich zwischen diesem Endteil 22 und dem Abschnitt des Gehäuses 3, in dem der Kugelumlaufgewindetrieb 1 untergebracht ist, angeordneten, sich in Axialrichtung erstreckenden, den Elektromotor umgrenzenden Gehäuseelement 23 verbunden ist.

Bei dem Endteil 22 handelt es sich um eine Art eines beispielsweise rechteckigen (in Aufsicht von außen sowie in Axialrichtung betrachtet) Deckels oder Abschlusselements. Die Befestigung erfolgt über Schrauben (in der Figur nicht gezeigt), die in den Ecken angeordnet sind. Eine derartige Befestigung ist bei Elektromotoren und insbesondere Servoantrieben häufig anzufinden, so dass sich weitere Erläuterungen erübrigen.

Von dem axialen, elektromotorseitigen freien Ende der Kugelumlaufspindel 5 erstreckt sich eine zur Längsachse 7 koaxiale Sacklochbohrung 24, in die sich ausgehend vom Endteil 22 ein Stab 25 hinein erstreckt. Dieser stellt ein Element einer in der Zeichnung nicht näher dargestellten Vorrichtung für ein absolutes Linearmesssystem auf Basis eines akustischen Verfahrens dar. Ein derartiges Linearmesssystem ist bekannt.

Am elektromotorseitigen freien Ende der Kugelumlaufspindel 5 ist ein Sicherheitsanschlag ausgebildet, der zum Schutz des Systems im Falle einer Betriebsstörung dient und eine Zerstörung durch Dämpfung der Schlagenergie der Kugelumlaufspindel 5 verhindert.

Der Sicherheitsanschlag umfasst einen Kunststoffring 32, in welchem ein Magnetring 29 integriert ist. Dieser Kunststoffring 32 wird durch eine Hohlmutter 31 mit Gewinde in der Kugelumlaufspindel 5 befestigt.

An den beiden Begrenzungspunkten der Linearbewegung der Kugelumlaufspindel 5 sind Magnetschalter 27,28 angebracht, die im Fall einer Fehlbedienung den Antrieb abschalten. Sollte auch diese Funktion durch Kabelbruch oder andere Störungen nicht möglich sein, dann schlägt der Kunststoffring 32 entweder an dem rückseitigen Ende der Kugelumlaufspindel 5 bzw. an dem Absatz der Kugelmutter auf der linken Seite der Bewegungsrichtung an.

Der Kunststoffring 32 ist drehend gelagert. Durch diese Lagerung und durch das Kunststoffmaterial wird ein Fressen verhindert.

Die axiale Lagerung der Kugelmutter 4 wird durch einen Gewindeflansch bzw. eine Kreisringscheibe 44 verspannt und eingestellt. Während des Betriebes wird gewährleistet, dass durch ein mögliches Einlaufen der Kugelumlaufspindel die Lagerung nachgespannt werden kann. An der inneren Wandung der Bohrung bzw. Öffnung, durch die sich die Kugelumlaufspindel 5 erstreckt und in Axialrichtung bewegt, sind Abstreifringe und Bürsten befestigt, die ein Eindringen von Schmutz in das Gehäuse verhindern.

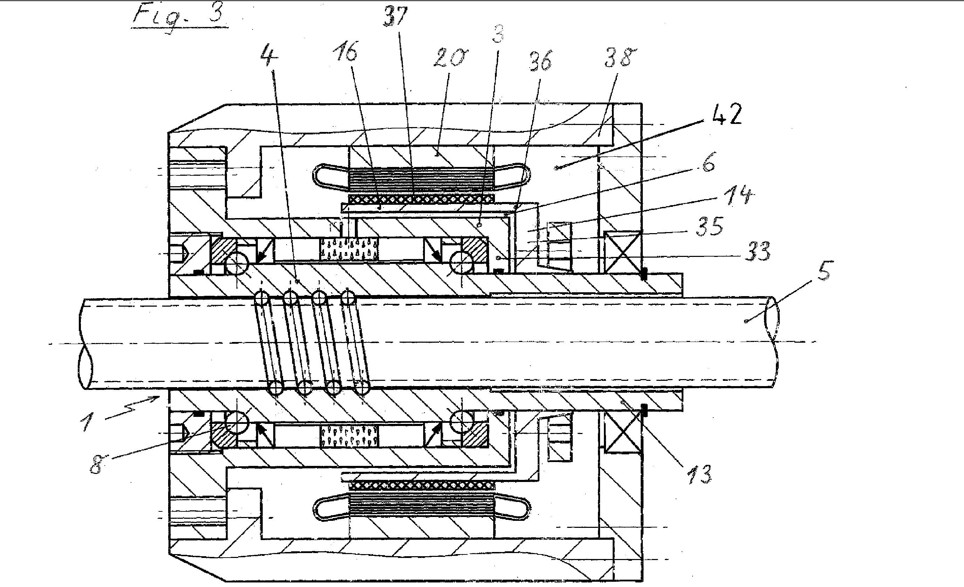

Bei der in der Fig. 3 im Längsschnitt gezeigte Alternative eines erfindungsgemäßen Schiebers 1 gemäß der zweiten Variante ist ein Schieber integriert, der im wesentlichen dem in der Figur 1a gezeigten Schieber entspricht und in der hier vorliegenden Beschreibung näher erläutert ist. Es wird daher auf die vorangegangene Beschreibung verwiesen; die Bezugszeichen in der Fig. 3a entsprechen denen in den Figuren 1a.

Bei dieser Alternative befindet sich die Seitenwand 3 zusammen mit der darin angeordneten Kugelumlaufspindel 5 im Inneren eines Hohlraumes 6, der radial um die Seitenwand 3 umlaufend angeordnet ist.

Mit dem Hohlwellenstutzen 13 ist eine im Längsschnitt U-förmige Glocke 14 drehstarr und fest verbunden. Die Glocke 14 erstreckt sich dabei von der Hohlwelle 13 in axialer Richtung von der Hohlwelle 13 weg (in der Fig. 3a nach links). Das hohlwellenseitige Ende des Gehäuses 3 ragt in den von Stator 20 und Rotor 16 konzentrisch umgebenen Hohlraum 6 hinein. Bei dieser Alternative stellt der Hohlraum 6 den von der Glocke 14 umgrenzten Innenraum dar.

Die Glocke 14 besitzt einen sich radial erstreckenden Glockenabschnitt 35 und geht an ihrem radialen äußeren Rand in einen sich axial erstreckenden seitlichen Glockenabschnitt 36 über, an dem radial außen Magnete 37 befestigt sind. Diese Glocke 14 stellt zusammen mit den Magneten 37 den Rotor 16 eines Elektromotors dar. Der dazugehörige Stator 20 ist radial außen von der Glocke 14 angeordnet und an einer äußeren Seitenwand 38 befestigt. Diese Seitenwand 38 ist wiederum fest mit dem Seitenwand 3 verbunden.

Bei dieser zweiten Alternative ist der Elektromotor mit dem Stator 20 und dem Rotor 16 nicht - wie bei der ersten Alternative - axial hinter der Seitenwand 3 angeordnet. Vielmehr befindet sich der Elektromotor 2 in etwa auf dem gleichen axialen Abschnitt wie die Kugelumlaufmutter 4 zusammen mit der Seitenwand 3. Der erfindungsgemäße Schieber gemäß dieser zweiten Alternative verfügt nur über eine geringe axiale Baulänge. Stator 20 und Rotor 16 sind bei dieser Alternative in einem Außenraum 42 angeordnet, der sich zwischen der Außenwand 38 und dem Gehäuse 3 befindet.

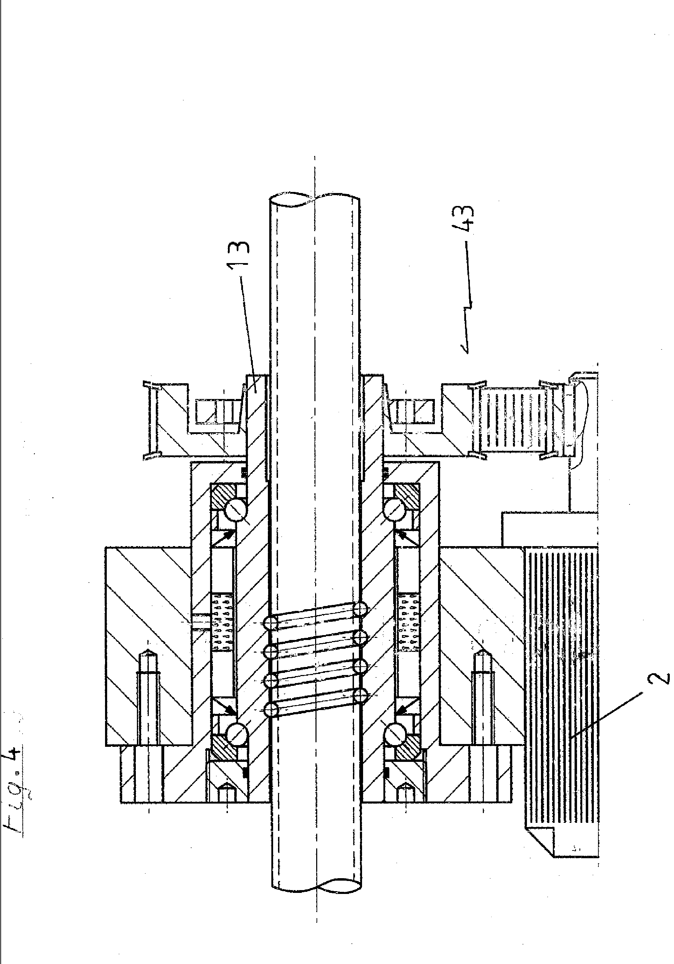

In der Figur 4 ist ein Längsschnitt durch einen Schieber gezeigt, der sich von dem entsprechenden Schieber der Figur 1 a im wesentlichen dadurch unterscheidet, dass der Hohlwellenstutzen 13 über einen Riementrieb 43 mit einem Elektromotor 2, nämlichen einen Servomotor, verbunden ist.

### BEZUGSZEICHEN

- 1: Schieber
- 2: Elektromotor
- 3: Gehäuse
- 4: Kugelumlaufmutter
- 5: Kugelumlaufspindel
- 6: Hohlraum
- 7: Längsachse
- 8: Lager
- 9: Lager
- 10: Kugel/ Kugelkanal
- 11: Öffnung
- 12: hohler Innenraum
- 13: Hohlzylinderstutzen
- 14: Glocke
- 15: Seitenwand
- 16: Rotor
- 17: Bohrung
- 18: Schulter
- 19: kreisringförmiger Raum
- 20: Stator
- 21: Hohlzylinderrohr
- 22: Endteil
- 23: Gehäuseelement
- 24: Sacklochbohrung
- 25: Stab
- 26: Linearmesssystem
- 27: Magnetschalter
- 28: Magnetschalter Gewindeflansch
- 29: Magnetring
- 30: Innenraum
- 31: Hohlmutter
- 32: Kunststoffring
- 33: Abschlusswand
- 34: Durchgangsöffnung
- 35: radialer Glockenabschnitt
- 36: seitlicher Glockenabschnitt
- 37: Magnete
- 38: Seitenwand
- 39: Ringflansch
- 40: Bohrung
- 41: Maschinenelement
- 42: Außenraum
- 43: Riemenantrieb
- 44: Kreisringscheibe
- 45: Gewinde an Kreisringscheibe 44
- 46: Gewinde an Seitenwand 3
- 47: Durchgangsbohrung
- 48: hohlzylindrischer Fortsatz
- 49,: 49' Abstreifringe, Bürsten
- 50: Materialblock
- 51: Führungszylinder
- 52: Stempel

## Patentansprüche

1. Schieber mit einem Gehäuse (3,33,44) und mit einem Kugelumlaufgewindetrieb (1) mit einer Kugelumlaufspindel (5) und einer damit zusammenwirkenden Kugelumlaufmutter (4), die durch Lager (8,9) drehbar im oder am Gehäuse (3) gehaltert ist und die an einem axialen Ende in eine fest mit der Kugelumlaufmutter (4) verbundene Hohlwelle (13), die zur Verbindung mit einem Elektromotor (2) oder einem anderen Antrieb geeignet ist, übergeht, wobei die Hohlwelle (13) und die Kugelumlaufspindel (5) eine gemeinsame Längsachse (7) besitzen und die Hohlwelle (13) derart dimensioniert ist, dass die Kugelumlaufspindel (5) in den Innenraum der Hohlwelle (13) hineinragen kann,
**dadurch gekennzeichnet,**
**dass** die Lager (8, 9) der Kugelumlaufmutter (4) axial beabstandet derart angeordnet sind, dass sich die Kugelumlaufmutter (4) zumindest teilweise zwischen den beiden Lager (8, 9) erstreckt und die Lager (8,9) sowohl radiale als auch axiale Kräfte aufnehmen können, dass sich die Hohlwelle (13) ausgehend von der Kugelumlaufmutter (4) außerhalb des gelagerten Bereichs an diesen anschließt,
**dass** die Kugelumlaufmutter (4) mit der Hohlwelle (13) einstückig ausgebildet ist und
**dass** das Gehäuse (3,33,44) einen Innenraum (12) umschließt, in dem die Kugelumlaufmutter (4) sowie die dazugehörigen Lager (8,9) angeordnet sind und lediglich die Hohlwelle (13) und die Kugelumlaufspindel (5) aus diesem Innenraum (12) herausgeführt sind.

2. Schieber nach Anspruch 1,
**dadurch gekennzeichnet, dass**
die Lager (8,9) an den axialen Enden der Kugelumlaufmutter (4) angeordnet sind.

3. Schieber nach Anspruch 1 oder 2,
**dadurch gekennzeichnet, dass**
die Hohlwelle (13) derart dimensioniert ist, dass die Kugelumlaufspindel (5) durch den Innenraum der Hohlwelle (13) hindurchragen kann.

4. Schieber nach Anspruch 3,
**dadurch gekennzeichnet, dass**
die Kugelumlaufspindel (5) in einen Hohlraum (6) hineinragen kann und
der Hohlraum (6), die Kugelumlaufspindel (5) und die Hohlwelle (13) eine gemeinsame Längsachse (7) besitzen.

5. Schieber nach einem der vorhergehenden Ansprüche,
**dadurch gekennzeichnet, dass**
der Innenraum (12) nach außen hin geschlossen ist.

6. Schieber nach Anspruch 5"
**dadurch gekennzeichnet, dass**
der Innenraum (12) hohlzylinderförmig ist.

7. Schieber nach einem der vorhergehenden Ansprüche,
**dadurch gekennzeichnet, dass**
er mit einem Elektromotor (2), der einen Stator (20) und einen Rotor (16) besitzt, ausgestattet ist, mit der Hohlwelle (13) verbundenen ist und darüber die Kugelumlaufmutter (4) antreiben kann.

8. Schieber nach Anspruch 7,
**dadurch gekennzeichnet, dass** eines oder beide der folgenden Merkmale erfüllt ist
i) die Hohlwelle (13) ist drehstarr an dem Rotor (16) des Elektromotors (2) befestigt ist oder über ein Getriebe damit verbunden ist und der Stator (20) fest mit dem Gehäuse (3,33,44) verbunden ist und
ii) der Elektromotor (2) ist ein Synchronmotor.

9. Schieber nach Anspruch 7 oder 8,
**dadurch gekennzeichnet, dass**
der Rotor (16) des Elektromotor (2) einen Außenläufer darstellt.

10. Schieber nach einem der Ansprüche 7 bis 9
**dadurch gekennzeichnet, dass**
der Rotor (16) und der Stator (20) konzentrisch um den Hohlraum (6) angeordnet sind.

11. Schieber nach einem der Ansprüche 7 bis 10
**dadurch gekennzeichnet, dass**
der Rotor (16) eine Glocke (14) darstellt, die sich koaxial zur Längsachse (7) der Kugelumlaufspindel (5) in Axialrichtung anschließend an die Kugelumlaufmutter (4) erstreckt und mittels derer der Rotor (16) drehstarr mit der Hohlwelle (13) verbunden ist, und dass der Stator (20) in dem von der Glocke (14) umgrenzten Innenraum (30) angeordnet ist.

12. Schieber nach Anspruch 11,
**dadurch gekennzeichnet, dass**
die Magnete des Rotors (16) radial innen an der Glocke (14) angebracht und dort befestigt sind.

13. Schieber nach einem der Ansprüche 7 bis 12,
**dadurch gekennzeichnet, dass**
der mit der Kugelumlaufmutter (4) verbundene Rotor (16) oder Stator (20) über keine eigene Lagerung verfügt.

14. Schieber nach einem der vorhergehenden Ansprüche,
**dadurch gekennzeichnet, dass**
am freien Ende der Kugelumlaufspindel (5) ein absolutes Linearmesssystem (26) in Axialrichtung angeordnet ist und/oder am freien Ende der Kugelumlaufspindel (5) ein Sicherheitsanschlag (27,28,29,31,32) angeordnet ist.

## Claims

1. A slider with a housing (3, 33, 44) and a ball screw thread drive (1) with a ball screw spindle (5) and a ball screw nut (4) cooperating with the latter, and which is supported rotatably in or on the housing (3) by bearings (8, 9), and which, at an axial end, passes into a hollow shaft (13) fixedly connected to the ball screw nut (4), which hollow shaft (13) is suitable to be connected to an electric motor (2) or another drive, wherein the hollow shaft (13) and the ball screw spindle (5) have a common longitudinal axis (7) and the hollow shaft (13) is dimensioned such that the ball screw spindle (5) can protrude into the interior space of the hollow shaft (13),
**characterized in that**
the bearings (8, 9) of the ball screw nut (4) are arranged to be axially spaced in such a manner that the ball screw nut (4) extends at least in part between the two bearings (8, 9), and the bearings (8, 9) can receive both radial and axial forces,
that the hollow shaft (13), starting from the ball screw nut (4), joins the supported area outside the latter,
that the ball screw nut (4) is formed to be integral with the hollow shaft (13), and
that the housing (3, 33, 44) encloses an interior space (12), in which the ball screw nut (4) and the associated bearings (8, 9) are arranged and only the hollow shaft (13) and the ball screw spindle (5) are led out from this interior space (12).

2. The slider according to claim 1,
**characterized in that**
the bearings (8, 9) are arranged at the axial ends of the ball screw nut (4).

3. The slider according to claim 1 or 2,
**characterized in that**
the hollow shaft (13) is dimensioned such that the ball screw spindle (5) can protrude through the interior space of the hollow shaft (13).

4. The slider according to claim 3,
**characterized in that**
the ball screw spindle (5) can protrude into a hollow space (6), and
the hollow space (6), the ball screw spindle (5) and the hollow shaft (13) have a common longitudinal axis (7).

5. The slider according to any one of the preceding claims,
**characterized in that**
the interior space (12) is closed toward the outside.

6. The slider according to claim 5,
**characterized in that**
the interior space (12) is of a hollow cylindrical shape.

7. The slider according to any one of the preceding claims,
**characterized in that**
it is equipped with an electric motor (2) which has a stator (20) and a rotor (16) and is connected to the hollow shaft (13) and can drive the ball screw nut (4) by means of that.

8. The slider according to claim 7,
**characterized in that** one or both of the following features is/are satisfied
i) the hollow shaft (13) is attached to the rotor (16) of the electric motor (2) to be torsionally rigid or is connected thereto via a drive, and the stator (20) is fixedly connected to the housing (3, 33, 44), and
ii) the electric motor (2) is a synchronous motor.

9. The slider according to claim 7 or 8,
**characterized in that**
the rotor (16) of the electric motor (2) represents an external rotor.

10. The slider according to any one of claims 7 to 9,
**characterized in that**
the rotor (16) and the stator (20) are concentrically arranged around the hollow space (6).

11. The slider according to any one of claims 7 to 10,
**characterized in that**
the rotor (16) represents a bell (14) extending coaxially to the longitudinal axis (7) of the ball screw spindle (5) in the axial direction following the ball screw nut (4), and by means of which bell the rotor (16) is connected to the hollow shaft (13) to be torsionally rigid, and
that the stator (20) is arranged within the interior space (30) defined by the bell (14).

12. The slider according to claim 11,
**characterized in that**
the magnets of the rotor (16) are attached radially inside on the bell (14) and are fixed there.

13. The slider according to any one of claims 7 to 12,
**characterized in that**
the rotor (16) or stator (20) connected to the ball screw nut (4) has no bearing arrangement of its own.

14. The slider according to any one of the preceding claims,
**characterized in that**
at the free end of the ball screw spindle (5), an absolute linear measuring system (26) is arranged in the axial direction, and/or at the free end of the ball screw spindle (5), a safety stop (27, 28, 29, 31, 32) is arranged.

## Revendications

1. Coulisseau présentant un boîtier (3, 33, 44) et un actionneur à vis à recirculation de billes (1) pourvu d'une vis à recirculation de billes (5) et d'un écrou à recirculation de billes (4) qui interagit avec celle-ci et qui est maintenu de manière rotative par des paliers (8, 9) dans ou au niveau du boîtier (3) et qui se prolonge à une extrémité axiale en un arbre creux (13) fermement relié à l'écrou à recirculation de billes (4), lequel est apte à être relié à un moteur électrique (2) ou à un autre entraînement, sachant que l'arbre creux (13) et la vis à recirculation de billes (5) possèdent un axe longitudinal (7) commun et l'arbre creux (13) est dimensionné de telle manière que la vis à recirculation de billes (5) puisse pénétrer dans l'espace intérieur de l'arbre creux (13),
**caractérisé en ce que**
les paliers (8, 9) de l'écrou à recirculation de billes (4) sont disposés de manière axialement espacée de telle manière que l'écrou à recirculation de billes (4) s'étende au moins en partie entre les deux paliers (8, 9) et les paliers (8, 9) puissent recevoir des forces aussi bien radiales qu'axiales,
l'arbre creux (13), partant de l'écrou à recirculation de billes (4), fait suite à la zone supportée a l'extérieur de cette dernière ,
l'écrou à recirculation de billes (4) est constitué d'une seule pièce avec l'arbre creux (13) et
le boîtier (3, 33, 44) entoure un espace intérieur (12) dans lequel l'écrou à recirculation de billes (4) ainsi que les paliers (8, 9) associés sont disposés et seulement l'arbre creux (13) et la vis à recirculation de billes (5) sont guidés hors de cet espace intérieur (12).

2. Coulisseau selon la revendication 1,
**caractérisé en ce que**
les paliers (8, 9) sont disposés aux extrémités axiales de l'écrou à recirculation de billes (4).

3. Coulisseau selon la revendication 1 ou 2,
**caractérisé en ce que**
l'arbre creux (13) est dimensionné de telle manière que la vis à recirculation de billes (5) puisse passer à travers l'espace intérieur de l'arbre creux (13).

4. Coulisseau selon la revendication 3,
**caractérisé en ce que**
la vis à recirculation de billes (5) peut pénétrer dans un espace creux (6) et l'espace creux (6), la vis à recirculation de billes (5) et l'arbre creux (13) possèdent un axe longitudinal (7) commun.

5. Coulisseau selon l'une des revendications précédentes,
**caractérisé en ce que**
l'espace intérieur (12) est fermé vers l'extérieur.

6. Coulisseau selon la revendication 5,
**caractérisé en ce que**
l'espace intérieur (12) est en forme de cylindre creux.

7. Coulisseau selon l'une des revendications précédentes,
**caractérisé en ce que**
il est équipé d'un moteur électrique (2) qui possède un stator (20) et un rotor (16), est relié à l'arbre creux (13) et peut entraîner via celui-ci l'écrou à recirculation billes (4).

8. Coulisseau selon la revendication 7,
**caractérisé en ce qu'**une ou les deux des caractéristiques suivantes est remplie
i) l'arbre creux (13) est fixé de manière solidaire en rotation au rotor (16) du moteur électrique (2) ou est relié à celui-ci via un engrenage et le stator (20) est relié fermement au boîtier (3, 33, 44) et
ii) le moteur électrique (2) est un moteur synchrone.

9. Coulisseau selon la revendication 7 ou 8,
**caractérisé en ce que**
le rotor (16) du moteur électrique (2) constitue un rotor externe.

10. Coulisseau selon l'une des revendications 7 à 9,
**caractérisé en ce que**
le rotor (16) et le stator (20) sont disposés de manière concentrique autour de l'espace creux (6).

11. Coulisseau selon l'une des revendications 7 à 10,
**caractérisé en ce que**
le rotor (16) constitue une cloche (14) qui s'étend de manière coaxiale à l'axe longitudinal (7) de la vis à recirculation de billes (5) en direction axiale en faisant suite à l'écrou à recirculation de billes (4) et moyennant laquelle le rotor (16) est relié de manière solidaire en rotation à l'arbre creux (13), et
le stator (20) est disposé dans l'espace intérieur (30) délimité par la cloche (14).

12. Coulisseau selon la revendication 11,
**caractérisé en ce que**
les aimants du rotor (16) sont placés de manière radialement intérieure au niveau de la cloche (14) et y sont fixés.

13. Coulisseau selon l'une des revendications 7 à 12,
**caractérisé en ce que**
le rotor (16) ou stator (20) relié à l'écrou à recirculation de billes (4) ne dispose pas d'un logement propre.

14. Coulisseau selon l'une des revendications précédentes,
**caractérisé en ce que**
un système de mesure linéaire absolu (26) est disposé en direction axiale à l'extrémité libre de la vis à recirculation de billes (5) et/ou une butée de sécurité (27, 28, 29, 31, 32) est disposée à l'extrémité libre de la vis à recirculation de billes (5).
